# EUROPÄISCHE PATENTANMELDUNG

(11) **EP 4 614 744 A1**
(43) Veröffentlichungstag der Anmeldung: **10.09.2025**
(21) Anmeldenummer: 25160449.2
(22) Anmeldetag: 27.02.2025
(51) Int. Cl.: H02G 3/06, H02G 3/08

(54) **LANGGUTDURCHFÜHRUNG SOWIE ANORDNUNG UMFASSEND EINE SOLCHE LANGGUTDURCHFÜHRUNG**

(30) Priorität: 06.03.2024 DE 202024101081 U; 05.04.2024 DE 202024101672 U
(71) Anmelder: OBO Bettermann Hungary Kft., 2347 Bugyi (HU)
(72) Erfinder: Danyis, Tàmas, 2370 Dabas (HU); Kardos, Gyula, 2040 Budaörs (HU)
(74) Vertreter: Haverkamp Patentanwälte PartG mbB

(57) **Zusammenfassung**

Beschrieben ist eine Langgutdurchführung, insbesondere Kabeldurchführung, umfassend einen einen Langgutkanal 8 einfassenden Anschlussstutzen 2 mit einem durch eine Öffnung 21 einer Wand 22 einer Installation, etwa einer Installationsdose, durchsteckbaren Endabschnitt 3, ausgerüstet mit zumindest einer Widerlagerkontur 6, die durch zumindest eine in Richtung zu einem Spannkörper 22 weisend ausgestellte Stirnseite einer in radialer Richtung von einem durch den Langgutkanal 8 hindurch geführten Langgut 32 beabstandeten Rastzunge 4 bereitgestellt ist, welche Widerlagerkontur 6 bei durch die Wandöffnung einer Installation durchgestecktem Endabschnitt 3 wandinnenseitig abgestützt ist sowie mit einem Klemmabschnitt 9 mit zumindest einem in radialer Richtung verstellbaren, in einer Klemmkörperausnehmung des Stutzens 2 angeordneten Klemmkörper K zum Verklemmen eines den Klemmabschnitt des Anschlussstutzens 2 durchgreifenden Langgutes 32 und umfassend einen auf dem Anschlussstutzens 2 unverlierbar angeordneten und gegenüber diesem in axialer Richtung desselben bewegbaren Stellkörper 15 mit einer zum radialen Verstellen des zumindest einen Klemmkörpers K ausgelegten und auf diesen wirkenden Stellkontur 17, und umfassend Mittel zum Verspannen des mit der zumindest einen Widerlagerkontur 6 seiner zumindest einen Rastzunge 4 wandinnenseitig abgestützten Anschlussstutzens 2 an der Wand einer Installation, wobei der Spannkörper 22 und der Stellkörper 15 in Richtung der Längserstreckung des Anschlussstutzens 2 gegeneinander und gegenüber dem Anschlussstutzen 2 verstellbar sind, wobei das Spannmittel sowohl zum Verspannen des Anschlussstutzens 2 an der Wand 34 einer Installation auf den Spannkörper 22 als auch zum Verklemmen eines den Klemmabschnitt 9 durchgreifenden Langgutes 33 durch den zumindest einen Klemmkörper K auf den Stellkörper 15 durch eine von dem jeweilig anderen Körper wegweisende Kraft wirkt.

## Beschreibung

Gegenstand der Erfindung ist eine Langgutdurchführung, insbesondere Kabeldurchführung, umfassend einen einen Langgutkanal einfassenden Anschlussstutzen mit einem durch eine Öffnung einer Wand einer Installation, etwa einer Installationsdose, durchsteckbaren Endabschnitt, ausgerüstet mit zumindest einer Widerlagerkontur, die durch zumindest eine in Richtung zu einem Spannkörper weisend ausgestellte Stirnseite einer in radialer Richtung von einem durch den Langgutkanal hindurch geführten Langgut beabstandeten Rastzunge bereitgestellt ist, welche Widerlagerkontur bei durch die Wandöffnung einer Installation durchgestecktem Endabschnitt wandinnenseitig abgestützt ist sowie mit einem Klemmabschnitt mit zumindest einem in radialer Richtung verstellbaren, in einer Klemmkörperausnehmung des Stutzens angeordneten Klemmkörper zum Verklemmen eines den Klemmabschnitt des Anschlussstutzens durchgreifenden Langgutes und umfassend einen auf dem Anschlussstutzens unverlierbar angeordneten und gegenüber diesem in axialer Richtung desselben bewegbaren Stellkörper mit einer zum radialen Verstellen des zumindest einen Klemmkörpers ausgelegten und auf diesen wirkenden Stellkontur, und umfassend Mittel zum Verspannen des mit der zumindest einen Widerlagerkontur seiner zumindest einen Rastzunge wandinnenseitig abgestützten Anschlussstutzens an der Wand einer Installation.

Bei elektrischen, elektrotechnischen und/oder elektronischen Installationen werden Installationsdosen unterschiedlicher Art zum Aufnehmen von elektrischen und/oder elektronischen Komponenten eingesetzt. Derartige Installationsdosen verfügen über Ausbrechöffnungen, die geöffnet werden, wenn ein Langgut, beispielsweise ein Kabel oder ein Kabelrohr in das Innere der Installationsdose geführt werden soll. In eine solche Installationsdose hineingeführte beziehungsweise darin eingreifende Langgüter, insbesondere wenn es sich hierbei insbesondere um ein Kabel handelt, benötigen in aller Regel eine Zugentlastung, damit ein auf das Kabel wirkender Zug nicht auf die Anschlüsse oder Kontaktierungen des Kabels beziehungsweise seiner Leiter innerhalb der Installationsdose wirken. Zu diesem Zweck sind Langgutdurchführungen entwickelt worden, die an einer Installationsdose montiert werden und in denen ein durch die Langgutdurchführung durchgeführtes Langgut, beispielsweise ein Kabel, für die Zwecke einer Zugentlastung verklemmt werden kann. Eine solche Langgutdurchführung verfügt über einen einen Langgutkanal einfassenden Anschlussstutzen. Der Langgutkanal dient zum Durchführen eines Langgutes. Ein solcher Anschlussstutzen verfügt über einen Endabschnitt, der in eine geöffnete Ausbrechöffnung einer Installationsdose als beispielhafte Installation eingeführt werden kann. Dieser Endabschnitt ist mit Rastzungen ausgerüstet, deren Nachgiebigkeit genutzt wird, um die Rastzungen mit ihrer Widerlagerkontur im Zuge eines Durchsteckens dieses Endabschnittes durch die Öffnung wandinnenseitig anordnen zu können. Die sich mit ihren Widerlagerkonturen wandinnenseitig abstützenden Rastzungen bilden das wandinnenseitige Widerlager für die vorgesehene Verspannung der Langgutdurchführung an der Wand der Installationsdose. Zum Verspannen der Langgutdurchführung mit der Installationsdose verfügt diese über Mittel zum Verspannen beziehungsweise Festsetzen des Anschlussstutzens an der Wand. Als Spannmittel dienen Muttern, die mit ihrem Innengewinde ein auf der äußeren Mantelfläche des Anschlussstutzens in axialer Richtung benachbart zu den Rastzungen angeordnetes Außengewinde kämmt. Die zu den Rastzungen weisende Seite einer solchen Spannmutter wird als Klemmfläche genutzt. Wird die Spannmutter angezogen, wirkt diese mit ihrer Klemmfläche gegen die Wandaußenseite, wodurch in Zusammenwirkung mit dem wandinnenseitigen Widerlager die Langgutdurchführung mit der Wand verspannt ist. Wenn eine Abdichtung zwischen der Langgutzuführung und der Wand der Installationsdose erforderlich ist, wird zwischen der Klemmfläche der Spannmutter und der Wandaußenseite ein Dichtring angeordnet.

Vorbekannt sind Langgutdurchführungen dieser Art beispielsweise aus EP 1 710 886 B1, EP 2 240 987 B1, EP 2 225 811 B1 oder EP 4 060 838 A1.

Bei diesen vorbekannten Langgutdurchführungen ist es zur Montage derselben in beziehungsweise an einer Wandöffnung erforderlich, die Spannmuttern nach Einsetzen des Endabschnittes in die Öffnung einer Wand mittels eines Werkzeuges, typischerweise einer Zange oder eines Maulschlüssels, zu spannen. Die Spannmuttern vorbekannter Langgutdurchführungen verfügen zu diesem Zweck über eine entsprechend konturierte außenseitige Drehmitnahme, ausgelegt nach Art eines Sechskants.

An dem dem Endabschnitt mit seinen Rastzungen gegenüberliegenden Endabschnitt des Anschlussstutzens befindet sich ein Klemmabschnitt mit in radialer Richtung verstellbaren Klemmlamellen. Diese dienen dem Zweck, ein durch den Langgutkanal des Anschlussstutzens hindurchgeführtes Langgut kraftschlüssig mit diesem zu verbinden. Die Klemmlamellen wirken in radialer Richtung auf das durch den Klemmabschnitt geführte Langgut. Um diese in radialer Richtung zu verstellen, dient ein Stellkörper. Dieser ist als Überwurfmutter konzipiert. Da der Anschlussstutzen an der Wand der Installationsdose festgesetzt ist, ist ein in dem Klemmabschnitt des Anschlussstutzens kraftschlüssig aufgenommenes Langgut mit der gewünschten Zugentlastung an die Installationsdose angeschlossen.

Bei solchen Langgutdurchführungen ist darauf zu achten, dass beim Aufschrauben der Überwurfmutter zum Aktivieren der Klemmlamellen die Verspannung der Spannmutter mit der Wand nicht gelockert wird. Überdies eignen sich diese vorbekannten Langgutdurchführungen, wenn ein abgedichteter Anschluss derselben an die Wand einer Installationsdose gewünscht wird, nur zum Anschließen an ebenen Wänden einer Installationsdose. Typischerweise sind Installationsdosen, wie diese für elektrische, elektrotechnische und/oder elektronische Unterputzinstallationen eingesetzt werden, solche mit einer zylindrischen, also außenseitig gekrümmten Wand. Wird die Klemmfläche einer solchen Spannmutter zum Festsetzen des Anschlussstutzens an die Krümmung der Wand einer solchen Installationsdose angepasst, kann diese nicht mehr gespannt werden.

Ausgehend von diesem diskutierten Stand der Technik liegt der Erfindung daher die Aufgabe zugrunde, eine Langgutdurchführung der eingangs genannten Art dergestalt weiterzubilden, dass nicht nur ein sicheres Widerlager wandinnenseitig bereitgestellt und eine Montage an einer Installation, etwa einer Installationsdose, vereinfacht ist, sondern dass zugleich eine Verklemmung eines in dem Langgutkanal befindlichen Langgutes möglich ist, ohne die Befestigung an der Wand einer Installation zu beeinträchtigen.

Gelöst wird diese Aufgabe erfindungsgemäß durch eine Langguteinführung der eingangs genannten Art, bei der der Spannkörper und der Stellkörper in Richtung der Längserstreckung des Anschlussstutzens gegeneinander und gegenüber dem Anschlussstutzen verstellbar sind, wobei das Spannmittel sowohl zum Verspannen des Anschlussstutzens an der Wand einer Installation auf den Spannkörper als auch zum Verklemmen eines den Klemmabschnitt durchgreifenden Langgutes durch den zumindest einen Klemmkörper auf den Stellkörper durch eine von dem jeweilig anderen Körper wegweisende Kraft wirkt.

Diese Langgutdurchführung verfügt über ein Spannmittel, durch das sowohl die notwendige Kraft zum Befestigen derselben an der Wand einer Installation als auch diejenige Kraft bereitgestellt wird, die für eine Verklemmung eines in dem Langgutkanal befindlichen Langgutes benötigt wird. Dieses Spannmittel wirkt somit gleichzeitig auf den Spannkörper und den Stellkörper. Mithin bildet jeweils ein Körper das Spannwiderlager für den anderen Körper. Bei dieser Langgutdurchführung ist nur ein einziges Spannmittel erforderlich, um die Kräfte für den Anschluss an der Wand einer Installation und zum Verklemmen eines Langgutes in dem Langgutkanal bereitzustellen, was die Konzeption der Langgutdurchführung vereinfacht. Diese kann daher in längsaxialer Richtung kürzer bauend ausgelegt werden, was für einige Anwendungen von Vorteil ist. Da ein Verspannen der Langgutdurchführung an der Wand einer Installation und die Verklemmung eines durch den Langgutkanal geführten Langgutes gleichzeitig erfolgt, besteht auch nicht die bei vorbekannten Langgutdurchführungen gegebene Gefahr, dass beim Einrichten der Langgutverklemmung eine zuvor vorgenommene Befestigung der Langgutdurchführung an der Wand einer Installation gelockert werden würde.

Vorteilhaft ist eine Ausgestaltung dieser Langgutdurchführung, bei der einer der beiden in längsaxialer Richtung des Anschlussstutzens gegeneinander verstellbaren Körper - Spannkörper und Stellkörper - einen Führungsabschnitt für den jeweils anderen Körper aufweist. Gemäß einem bevorzugten Ausführungsbeispiel trägt der Spannkörper einen solchen Führungsabschnitt. Dieser greift ein in den als Hülse ausgelegten Stellkörper, der somit an bzw. auf diesem geführt ist. Spannkörper und Stellkörper sind dann teleskopartig gegeneinander verstellbar, wobei eine solche Verstellung nicht notwendigerweise eine rein translatorische Bewegung dieser beiden Körper zueinander bzw. gegeneinander beinhaltet.

Gemäß einem ersten Ausführungsbeispiel ist vorgesehen, dass Spannkörper und Stellkörper translatorisch linear in Richtung der Längserstreckung des Anschlussstutzens gegeneinander und gegenüber dem Anschlussstutzen selbst verstellbar sind. Als Spannmittel dient bei einer solchen Auslegung der Langgutdurchführung ein Kraftspeicherelement, welches bestrebt ist, die beiden Körper gegeneinander zu spreizen, mithin voneinander weg zu drücken. Beide Körper sind gegen die durch ein solches Kraftspeicherelement bereitgestellte Kraft in Richtung zueinander verstellbar. Im Auslieferungszustand einer solchen Langgutdurchführung stehen der Spannkörper und der Stellkörper unter Vorspannung durch das zumindest eine Kraftspeicherelement. Die Montage einer solchen Langgutdurchführung an der Wand einer Installation erfolgt schlichtweg durch Einstecken seines die zumindest eine Widerlagerkontur aufweisenden Endabschnittes in eine vorbereitete Öffnung und Eindrücken des Anschlussstutzens soweit, bis die Widerlagerkontur die Wandinnenseite hintergreift. Der Spannkörper wird bei diesem Montagevorgang gegen die Rückstellkraft des zumindest einen Kraftspeicherelementes bewegt. Zum Einführen eines Langgutes wird hingegen der Stellkörper in Richtung zu dem Spannkörper gegen die Rückstellkraft des zumindest einen Kraftspeicherelementes bewegt, beispielsweise manuell verschoben, sodass der zumindest eine Klemmkörper in seine Offen-Stellung gebracht werden kann. Ist ein Langgut eingeführt, resultiert die Klemmkraft aus der aus dem zumindest einen Kraftspeicherelement auf den Stellkörper wirkenden Vorspannung, die über eine Stellkontur auf den zumindest einen Klemmkörper wirkt.

Gemäß einer anderen Ausgestaltung einer solchermaßen konzipierten Langgutausführung dient als Spannmittel zumindest ein Gewindeabschnitt, mit dem der Spannkörper und der Stellkörper miteinander in Eingriff gestellt sind. Ein Verdrehen der beiden Körper gegeneinander um die Längsachse des Anschlussstutzens führt dazu, dass, wenn die beiden Körper zusammen nur eine geringe Spannweite in Längserstreckung des Anschlussstutzens aufweisen, beide Körper voneinander wegbewegt, mithin gegeneinander gespreizt werden. Zum Lösen werden die beiden Körper in die entgegengesetzte Drehrichtung gegeneinander verdreht. Bei einer solchen Langgutdurchführung wird die notwendige Spann- und Klemmkraft erst aufgebracht, wenn der Anschlussstutzen wandseitig montiert und ein Langgut durch den Langgutkanal hindurchgeführt ist. Gehalten wird die aufgebrachte Spann- und Klemmkraft durch die Reibung der zwischen Spannkörper und Klemmkörper in Eingriff gestellten Gewindeabschnitte. Handelt es sich bei dem durch den Langgutkanal eingeführten Langgut mit einem Mantelmaterial mit einer gewissen Elastizität, wie beispielsweise die Mantelisolation eines elektrischen Kabels, wird diese Materialelastizität vorteilhaft genutzt, wenn der zumindest eine Klemmkörper in die Mantelfläche der Mantelisolierung etwas eingedrückt ist. Dann unterstützt diese Materialelastizität eine Aufrechterhaltung der Spann- und Klemmkraft.

Als Kraftspeicherelement dient typischerweise eine Druckfeder oder ein Druckfederpaket. Bereitgestellt werden kann eine solche Druckfeder als Schraubendruckfeder oder beispielsweise auch als Tellerfeder. Diese sitzen auf dem Anschlussstutzen, fassen diesen mithin umfänglich ein. Tellerfedern zeichnen sich durch eine geringe Höhe aus, um bereits hohe Vorspannkräfte zu erzielen. Um bei Vorsehen einer Tellerfeder den gewünschten translatorischen Verstellbetrag des Spannkörpers gegenüber dem Anschlussstutzen bereitzustellen, bietet es sich an, anstelle einer Tellerfeder ein Tellerfederpaket einzusetzen. Dann kann der ansonsten erforderliche Durchmesser zum Bereitstellen des benötigten Hubes geringer gehalten werden.

Bei einer solchen Langgutdurchführung ist der Spannkörper typischerweise nach Art einer Kappe mit einer Deckeldurchbrechung ausgelegt. Durch diese Durchbrechung greift der Anschlussstutzen. Durch die Deckeldurchbrechung ist ein in radialer Richtung nach innen vorspringender Flansch gebildet. Dieser dient mit seiner inneren Mantelfläche als Führungsabschnitt, mit dem der Spannkörper auf dem entsprechenden Abschnitt des Anschlussstutzens translatorisch verstell- beziehungsweise verschiebbar ist. Gebildet ist durch diesen in radialer Richtung nach innen vorspringenden Flansch spannkörperinnenseitig zugleich ein innenseitiger Stützabsatz, auf dem das zumindest eine Kraftspeicherelement mit seinem einen Ende abgestützt ist.

Typischerweise verfügt der Endabschnitt des Anschlussstutzens über mehrere mit Winkelabstand zueinander angeordnete Widerlagerkonturen, typischerweise mit gleichem Winkelabstand zueinander angeordnet. Gemäß einem bevorzugten Ausführungsbeispiel wird die zumindest eine Widerlagerkontur durch die von der übrigen Mantelfläche des Stutzens abragende, zum Spannkörper weisende Stirnseite zumindest einer Rastzunge bereitgestellt.

In dem Klemmabschnitt des Anschlussstutzens sind typischerweise mehrere, mit gleichem Winkelabstand in Umfangsrichtung zueinander angeordnete Klemmkörper vorgesehen. Bei den Klemmkörpern handelt es sich gemäß einem bevorzugten Ausführungsbeispiel um Teil eines an den Anschlussstutzen angeformten Klemmfingers. Die Klemmfinger sind dann gegenständlicher Bestandteil des Anschlussstutzens und brauchen bei einer Montage der Langgutdurchführung nicht individuell gehandhabt zu werden.

Ein solcher Klemmkörper verfügt über eine in radialer Richtung nach innen weisende Klemmfläche, mit der dieser auf die Mantelfläche eines in der Langgutaufnahme befindlichen Langgutes zum Verklemmen desselben in der Langgutaufnahme wirkt. An seiner in radialer Richtung gegenüberliegenden Außenseite verfügt der Klemmkörper zweckmäßigerweise über eine Stellschräge, auf die zum Verstellen des Klemmkörpers der Stellkörper wirkt.

Stellkörper und Spannkörper können an ihrer äußeren Umfangsfläche eine Betätigungskontur zum erleichterten Handhaben derselben aufweisen.

Eine solche Langgutdurchführung kann mit einer Einsteckdichtung ausgerüstet sein. Diese ist in dem Langgutkanal in längsaxialer Richtung formschlüssig an der Innenwand des Anschlussstutzens gehalten. Auf diese Weise kann eine abgedichtete Langgutdurchführung bereitgestellt werden.

Nachfolgend ist die Erfindung anhand von Ausführungsbeispielen unter Bezugnahme auf die beigefügten Figuren beschrieben. Es zeigen:
- **Fig. 1:**: Eine Langgutdurchführung gemäß einem Ausführungsbeispiel der Erfindung in einer perspektivischen Explosionsdarstellung,
- **Fig. 2:**: eine perspektivische Ansicht des Stellkörpers der Langgutdurchführung der Figur 1 in einer anderen Perspektive mit Blick auf ihre einführseitige Mündung,
- **Fig. 3:**: die Langgutdurchführung der Figur 1 mit ihren zusammengesetzten Bestandteilen im Auslieferungszustand,
- **Fig. 4:**: die Langgutdurchführung der Figur 1 mit ihren zusammengesetzten Bestandteilen nach manueller Betätigung ihres Stellkörpers,
- **Fig. 5a, 5b:**: die Langgutdurchführung der vorstehenden Figuren mit ihrem Stellkörper in der in Figur 4 gezeigten Stellung in einer Seitenansicht (Figur 5a) und in einem Längsschnitt (Figur 5b),
- **Fig. 6a, 6b:**: die Langgutdurchführung mit der Stellung ihres Stellkörpers gemäß Figur 3 in einer Seitenansicht (Figur 6a) und in einer Längsschnittdarstellung (Figur 6b),
- **Fig. 7:**: die Langgutdurchführung der vorstehenden Figuren mit einem durch Verklemmung auszugsgesichert gehaltenen Kabel als Langgut in einer Längsschnittdarstellung,
- **Fig. 8:**: eine Langgutdurchführung gemäß einem weiteren Ausführungsbeispiel der Erfindung in einer Seitenansicht nach Art einer Explosionsdarstellung,
- **Fig. 9:**: die Langgutdurchführung der Figur 8 mit ihren zusammengesetzten Bestandteilen im Auslieferungszustand vor Verspannen derselben und
- **Fig. 10:**: die Langgutdurchführung der Figur 9 nach Montieren derselben an der Wand einer Installation.

Eine Langgutdurchführung 1 umfasst einen Anschlussstutzen 2. Bei dem dargestellten Ausführungsbeispiel dient der Anschlussstutzen 2 zum Anschließen der Langgutdurchführung 1 an die Wand einer Installation, typischerweise einer Installationsdose zur Aufnahme von elektrischen und/oder elektronischen Installationskomponenten. Für den Anschluss an die Installationsdose verfügt der Anschlussstutzen 2 über einen Endabschnitt 3 mit mehreren daran angeordneten Rastzungen 4. Die Rastzungen 4 sind in Richtung von dem freien Ende 5 dieses Endabschnittes 3 wegweisend gegenüber der übrigen Mantelfläche des Endabschnittes 3 des Anschlussstutzens 2 ausgestellt. Die gegenüber dieser Mantelfläche des Anschlussstutzens 2 in radialer Richtung vorspringenden Enden der Rastzungen 4 bilden von dem freien Ende 5 wegweisende Widerlagerflächen 6 als Widerlagerkonturen. Die Rastzungen 4 sind in radialer Richtung bezüglich des Anschlussstutzens 2 aufgrund des für die Herstellung des Anschlussstutzens 2 gewählten Kunststoffmaterials verstellbar. Die den Widerlagerflächen 6 gegenüberliegende Enden der Rastzungen 4 gehen über in einen Ringkörper 7. Die Rastzungen 4 sind daher an diesen Ringkörper 7 als Teil des Anschlussstutzens 2 an den Ringkörper 7 angeformt.

Der Anschlussstutzen 2 verfügt über einen inneren, seiner Längserstreckung folgenden Durchgangskanal - einen Langgutkanal 8.

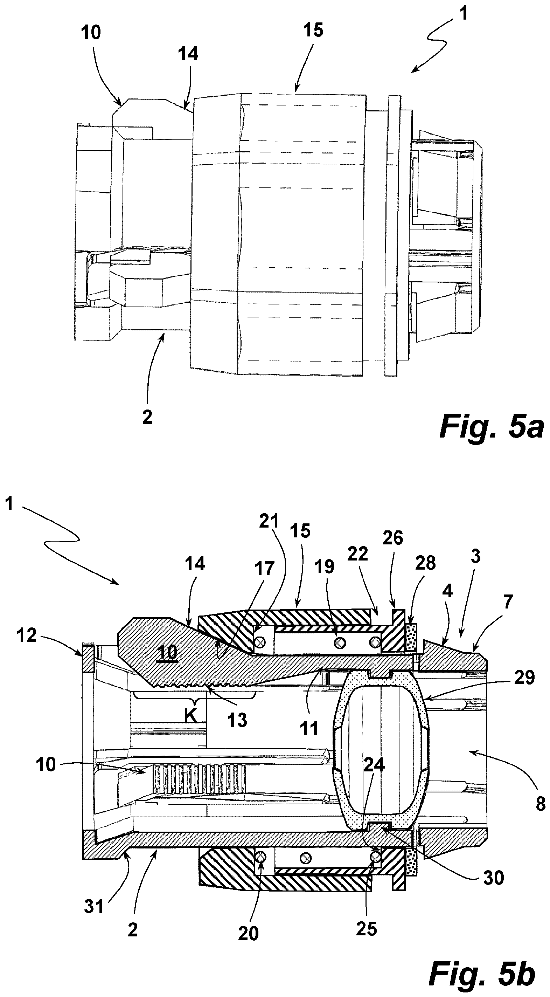

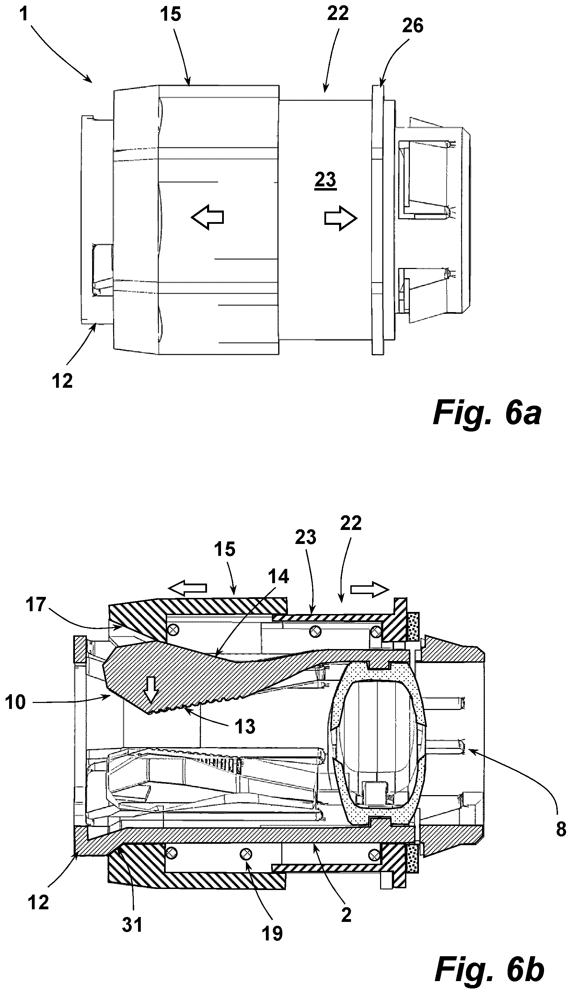

Zum Zwecke einer Verklemmung eines in den Langgutkanal 8 eingeführten Langgutes verfügt der Anschlussstutzen 2 über einen Klemmabschnitt 9. In dem Klemmabschnitt sind mehrere, bei dem dargestellten Ausführungsbeispiel drei Klemmfinger 10 als Klemmkörper umfänglich mit gleichem Winkelabstand zueinander angeordnet. Die Klemmfinger 10 sind Teil des Anschlussstutzens 2, da diese an diesen angeformt sind. Bei dem Anschlussstutzen 2 handelt es sich um ein Kunststoffspritzgussteil. Der Bereich der Anformung der Klemmfinger 10 an den Anschlussstutzen 2 ist im Rahmen dieser Ausführungen auch als Wurzel bzw. Wurzelbereich 11 angesprochen. Die Klemmfinger 10 erstrecken sich von dem Wurzelbereich 11 in Richtung zu der einführseitigen Mündung des Anschlussstutzens 2, in die ein durch die Langgutdurchführung 1 hindurchzuführendes Langgut, beispielsweise ein elektrisches Kabel eingeführt wird. Die einführseitige Mündung wird von einem Ringkörper 12 eingefasst. Die Klemmfinger 10 sind mit Ausnahme ihres an ihrem längsaxialen Ende befindlichen Wurzelbereiches 11 durch einen Bewegungsspalt von den übrigen Bestandteilen des Anschlussstutzens 2 getrennt. Insofern befinden sich die Klemmfinger 10 jeweils in einer Klemmkörperausnehmung. Die Klemmfinger 10 verfügen mit Abstand von ihrem Wurzelbereich 11 jeweils über den eigentlichen Klemmkörper K auf. Der den Klemmkörper K mit dem Wurzelbereich 11 verbindende Abschnitt der Klemmfinger 10 ist infolge der Materialbeschaffenheit des Anschlussstutzens 2 elastisch biegbar. Der Ringkörper 12 begrenzt die Klemmkörperausnehmungen in axialer Richtung am einsetzseitigen Ende der Langgutdurchführung 1. Dessen in radialer Richtung nach innen weisende Fläche dient als Kontaktfläche zum Kontaktieren der Mantelfläche eines in den Langgutkanal 8 eingeführten Langgutes. Diese Fläche ist als Klemmfläche 13 in Figuren 5b und 6b erkennbar. Die Klemmflächen 13 tragen reibungserhöhende Strukturen, bei denen es sich bei dem dargestellten Ausführungsbeispiel um quer zur Längsachse des Langgutkanals 8 erstreckende Wülste handelt. In Umfangsrichtung gesehen beträgt die Breite der Klemmfläche 13 bei dem dargestellten Ausführungsbeispiel etwa 4 mm. Die Klemmkörper K der Klemmfinger 10 sind aufgrund der vorbeschriebenen Anbindung an den Anschlussstutzen 2 in radialer Richtung verstellbar. An ihrer der Klemmfläche 13 gegenüberliegenden radialen Außenseite tragen die Klemmkörper K der Klemmfinger 10 jeweils eine Stellschräge 14. Wenn auf die Stellschräge 14 eine in Richtung zu dem Ringkörper 12 wirkende Kraft anliegt, werden die Klemmkörper K in radialer Richtung nach innen und somit in den Langgutkanal 8 hinein verstellt.

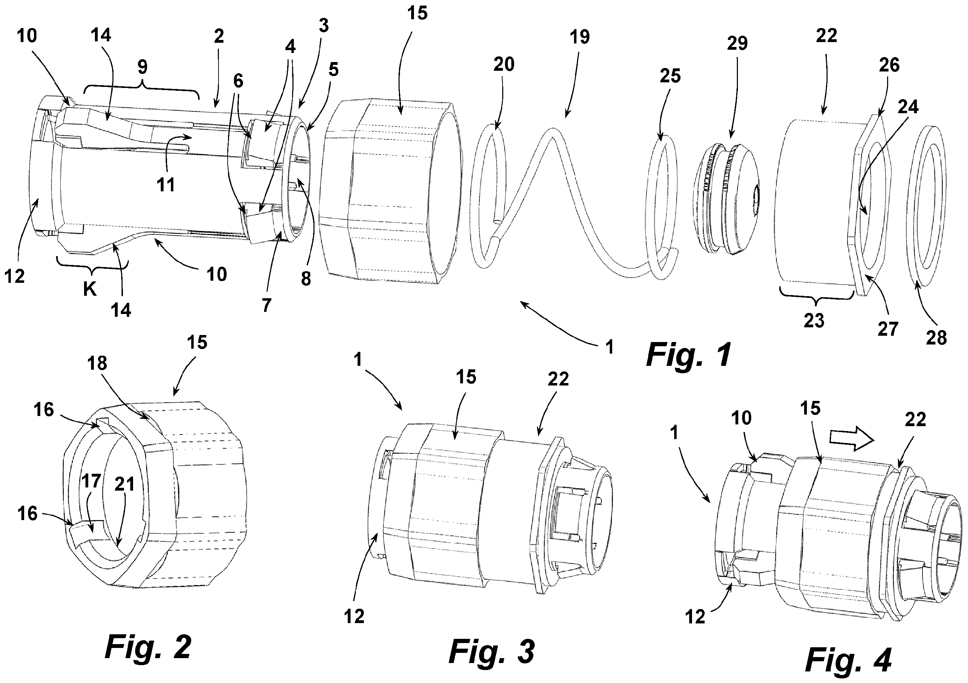

Zum Verstellen der Klemmfinger 10 dient ein hülsenartig ausgeführter Stellkörper 15. Dieser umfasst den Anschlussstutzen 2. Wie aus der perspektivischen Ansicht des Stellkörpers 15 der Figur 2 erkennbar, verfügt der Stellkörper 15 an seinem zu dem Ringkörper 12 weisenden innenseitigen Endabschnitt über Rastfingervertiefungen 16, deren Boden 17 als zu der Stellschräger 14 der Klemmfinger 10 komplementäre Stellschräge ausgeführt ist. Durch den Eingriff der Rastfinger 10 mit dem radial äußeren Abschnitt ihrer Klemmkörper K in die Rastfingervertiefungen 16 ist der Stellkörper 15 verdrehgesichert auf dem Anschlussstutzen 2 gehalten. Der Stellkörper 15 ist mit einer linearen axialen Bewegung translatorisch gegenüber dem Anschlussstutzen 2 verstellbar.

Die radiale Außenseite des Stellkörpers 15 trägt mehrere, bei dem dargestellten Ausführungsbeispiel in Umfangsrichtung angeordnete Betätigungskonturen 18, die ein erleichtertes manuelles Ergreifen des Stellkörpers 15 erlauben, um diesen in Richtung der Längserstreckung des Anschlussstutzens 2 von dem Ringkörper 12 wegzubewegen.

Teil der Langgutdurchführung 1 ist ferner eine Schraubendruckfeder 19. Diese sitzt außenseitig in Bezug auf den Anschlussstutzen 2 und ist mit ihrer zu dem Ringkörper 12 weisenden Endwindung 20 an einem in radialer Richtung nach innen vorspringenden Stützabsatz 21 des Stellkörpers 15 abgestützt (siehe auch Figuren 5b, 6b).

Der Langgutdurchführung 1 zugehörig ist des Weiteren bei dem dargestellten Ausführungsbeispiel, da zum Anschluss an eine Installationsdose vorgesehen, ein Spannkörper 22. Der Spannkörper 22 verfügt über einen Führungsabschnitt 23, mit dem er in die zu diesem weisende Offenseite des Stellkörpers 15 eingreift. Der Spannkörper 22 trägt an seinem von dem Ringkörper 12 des Anschlussstutzens 2 wegweisenden Ende einen in radialer Richtung nach innen vorspringenden Absatz, durch den ein Stützabsatz 24 bereitgestellt ist. An diesem ist die Schraubendruckfeder 19 mit ihrer anderen Endwindung 25 abgestützt. Der Spannkörper 22 verfügt ferner über einen in radialer Richtung nach außen abragenden Flansch 26, dessen von dem Ringkörper 12 wegweisende Fläche als Spannfläche 27 dient, die unter Zwischenschaltung einer Flachdichtung 28 gegen die Außenwand einer Installationsdose wirkt, wenn die Langgutdurchführung 1 an eine solche angeschlossen ist.

Bei dem dargestellten Ausführungsbeispiel verfügt die Langgutdurchführung 1 ferner über eine Einsteckdichtung 29, hergestellt aus einem Elastomer. Diese sitzt innerhalb des Langgutkanals 8 und ist in diesem an einem typischerweise umlaufenden Vorsprung 30 an der Innenwand des Anschlussstutzens 2 in längsaxialer Richtung formschlüssig gehalten (siehe auch Figuren 5b, 6b).

Figur 3 zeigt die Langgutdurchführung 1 im Auslieferungszustand. Aufgrund der zwischen dem Stützabsatz 21 des Stellkörpers 15 und dem Stützabsatz 24 des Spannkörpers 22 befindlichen Schraubendruckfeder 19 werden durch diese die beiden Körper - der Stellkörper 15 und der Spannkörper 22 - voneinander weggedrückt. Hierdurch wird die notwendige Spannkraft zum Verspannen des Flansches 26 bzw. der Flachdichtung 28 an der Außenwand einer Installation ebenso bereitgestellt wie die erforderliche Klemmkraft, mit der die Klemmfinger 10 auf die Mantelfläche eines in den Langgutkanal 8 eingeführten Langgutes wirken. In dieser Stellung liegt die Flachdichtung 28 an den Widerlagerflächen 6 der Rastzungen 4 an und der Stellkörper 15 wirkt gegen den Ringkörper 12, der im Auslieferungszustand der Langgutdurchführung 1, das heißt: Bei nicht durchgeführtem Langgut, einen Anschlag für den Stellkörper 15 bereitstellt. Es versteht sich, dass die Schraubendruckfeder 19 in dieser Stellung nicht entspannt ist und somit sowohl der Stellkörper 15 als auch der Spannkörper 22 unter Vorspannung gegen ihre jeweilige Bewegungsbegrenzung in axialer Richtung wirken.

Für eine Montage der Langgutdurchführung 1 an einer Installation wird der Endabschnitt 3 in eine vorbereitete Wandöffnung der Installation eingesteckt, bis die Rastzungen 4 die Wand hintergreifen. Um ein bestimmungsgemäßes Hintergreifen der Wand durch die Rastzungen 4 mit ihren Widerlagerflächen 6 zu gewährleisten, wird der Spannkörper 22 in Richtung zu dem Stellkörper 15 gegen die Kraft der Druckfeder 19 translatorisch gegenüber dem Anschlussstutzen 2 verstellt.

Ist die Ein- bzw. Durchführung eines Langgutes in die Langgutaufnahme 1 vorgesehen, wird der Stellkörper 15, wie in Figur 4 mit einem Blockpfeil kenntlich gemacht, in Richtung von dem Ringkörper 12 des Anschlussstutzens 2 weg und auf den Flansch 26 des Spannkörpers 22 gegen die Rückstellkraft der Druckfeder 19 verschoben. Diese Offen-Stellung der Langguteinführung 1 in Bezug auf die Möglichkeit eines Einführens eines Langgutes durch die einsetzseitige Mündung ist in Figur 4 gezeigt. Bei dem dargestellten Ausführungsbeispiel ist das für den Anschlussstutzen 2 verwendete Kunststoffmaterial mit einer gewissen Materialelastizität ausgestattet, sodass die Klemmfinger 10 selbsttätig im Zuge des Zurückschiebens des Stellkörpers 15 in radialer Richtung nach außen verstellt werden.

Der Aufbau der Langgutdurchführung 1 und seine Funktionsweise hinsichtlich einer Langgutverklemmung in dem Langgutkanal 8 ist nachfolgend anhand der Figuren 5 bis 7 beschrieben. Die vorbeschriebe Offen-Stellung der Langgutdurchführung 1 ist in einem Längsschnitt in Figur 5b wiedergegeben. Der obere Klemmfinger 10 ist im Schnitt gezeigt. Ein weiterer Klemmfinger 10 ist aufgrund der Winkelbeabstandung von etwa 120 Grad in einer perspektivischen Ansicht sichtbar. Deutlich erkennbar ist das Zusammenwirken der beiden Stellschrägen 14, 17 von Klemmkörper K und Stellkörper 15. Der Stellkörper 15 wird in dieser Stellung manuell gegenüber dem Anschlussstutzen 2 gegen die Rückstellkraft der Schraubendruckfeder 19 gehalten.

In dieser Offen-Stellung der Klemmfinger 10 kann durch die durch den Ringkörper 12 eingefasste Mündung ein Langgut eingeschoben werden. Die in dem Anschlussstutzen 2 befindliche Einsteckdichtung 29 verfügt über axiale Durchbrechungen, durch die das Langgut hindurchgesteckt wird. Die Lochrandbereiche legen sich an der Mantelfläche eines im durchgesteckten Langgutes an, sodass auf diese Weise der Durchgriff abgedichtet ist.

Wird der in den Figuren 5a, 5b gegen die Rückstellkraft der Druckfeder 19 gehaltene Stellkörper 15 losgelassen, entspannt sich die Schraubendruckfeder 19, sodass der Stellkörper 15 in Richtung zu dem Ringkörper 12 des Anschlussstutzens 2 bewegt wird. Der Ringkörper 12 trägt an seiner zu dem Stellkörper 15 weisenden Seite einen Schräganschlag 31, gegen den die vordere Innenseite des Stellkörpers 15 zum Begrenzen der Verstellbewegung desselben mit einer komplementären Anschlagfläche anschlägt, wie aus Figur 6b erkennbar. Der Stellkörper 15 wird bei dieser Bewegung teleskopartig gegenüber dem Spannkörper 22 verstellt. Durch diese Verstellbewegung des Stellkörpers 15 (in Figur 6b durch Pfeile angedeutet), werden die Klemmkörper K der Klemmfinger 10 in radialer Richtung aufgrund des Zusammenwirkens der Stellschrägen 14 und 17 in radialer Richtung nach innen in Richtung auf ein in dem Langgutkanal 8 befindliches Langgut verstellt und wirken sodann auf die Mantelfläche des Langgutes.

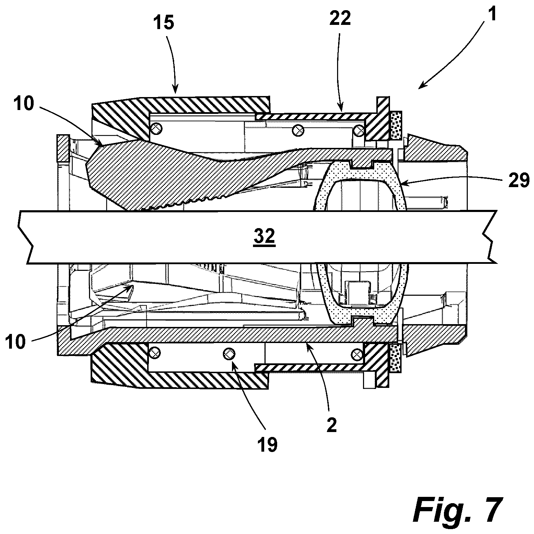

Figur 7 zeigt ein in Bezug auf die Langgutdurchführung 1 recht dünnes Kabel 32, welches in dieser Endposition durch die Klemmfinger 10 verklemmt in den Langgutkanal 8 der Langgutdurchführung 1 fixiert ist. Die Flächen 13 sind in radialer Richtung den äußeren Mantel des Kabels 32 etwas eingedrückt. Das Kabel 32 ist damit auszugsgesichert in der Langgutdurchführung 1 gehalten.

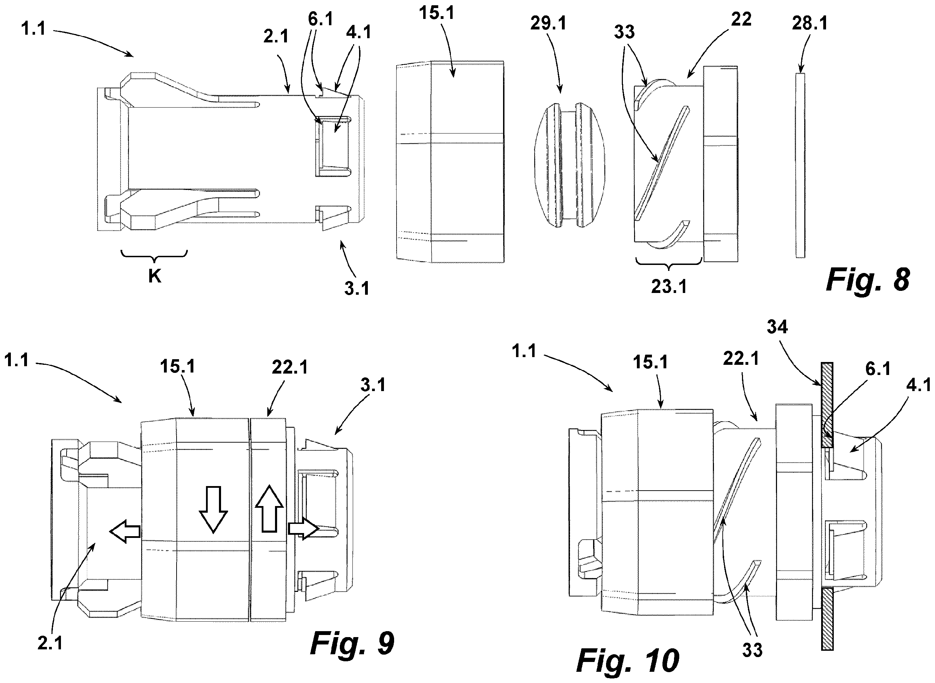

Figur 8 zeigt eine weitere Langgutdurchführung 1.1, die prinzipiell genauso aufgebaut ist wie die Langgutdurchführung 1 des Ausführungsbeispiels der Figuren 1 bis 7. Soweit in den Figuren 8 bis 10 angegeben, sind gleiche Merkmale der Langgutdurchführung 1 bei der Langgutdurchführung 1.1 mit denselben Bezugszeichen, ergänzt um den Suffix ".1" kenntlich gemacht. Die vorstehenden Ausführungen der Langgutdurchführung 1 gelten somit gleichermaßen für die Langgutdurchführung 1.1.

Von der Langgutdurchführung 1 unterscheidet sich die Langgutdurchführung 1.1 durch die Spannmittel, mit denen der Spannkörper 22.1 gegenüber dem Stellkörper 15.1 verstellt wird, um einerseits die Langgutdurchführung 1.1 mit ihrem Anschlussstutzen 2.1 an der Wand einer Installation zu befestigen und um andererseits die erforderliche Verstellung des Stellkörpers 15.1 gegenüber dem Anschlussstutzen 2.1 zu bewirken, damit die Klemmkörper K in radialer Richtung nach innen in den Langgutkanal hinein zum Verklemmen eines darin befindlichen Langgutes verstellt werden. Während bei der Langgutdurchführung 1 die Schraubendruckfeder 19 zum Spreizen von Spannkörper 22 und Stellkörper 15 voneinander dient, wird bei der Langgutdurchführung 1.1 diese Spreizbewegung dadurch ermöglicht, dass auf dem Führungsabschnitt 23.1 des Stellkörpers 22.1 mehrere Gewindesegmentabschnitte 33 angeformt sind. Diese Gewindesegmentabschnitte 32 greifen in entsprechende Gewindegangausnehmungen an der Innenseite des Stellkörpers 15.1 ein.

Figur 9 zeigt die Langgutdurchführung 1 in ihrem Auslieferungszustand. In dieser Stellung von Stellkörper 15.1 und Spannkörper 22.1 weist diese Bauteilzusammenstellung ihre geringste Spannweite (Erstreckung in Längsrichtung des Anschlussstutzens 2.1) auf. Durch eine Drehbewegung des Stellkörpers 15.1 und/oder des Spannkörpers 22.1 gegeneinander, wie in Figur 9 durch die Blockpfeile kenntlich gemacht, werden diese beiden Körper 15.1, 22.1 voneinander wegbewegt.

Figur 10 zeigt die Langgutdurchführung 1.1 montiert an der Wand 33 einer im Übrigen nicht näher dargestellten Installation. Der Spannkörper 22.1 und der Stellkörper 15.1 sind in dieser Stellung durch die Reibung der Gewindesegmentabschnitte 33 in den komplementären Gewindenuten an der Innenseite des Stellkörpers 15.1 gehalten. Bevor die beiden Körper 15.1, 22.1 voneinander durch entsprechendes Drehen des einen Körpers gegenüber dem anderen gespreizt werden, ist der Endabschnitt 3.1 des Anschlussstutzens 2.1 durch eine zuvor vorbereitete Wandöffnung der Installation hindurchgesteckt worden, sodass die Widerlagerflächen 6.1 der Rastzungen 4.1 die Wand 34 hintergreifen. Ebenfalls ist vor dem finalen Festsetzen der Langgutdurchführung 1.1 an der Wand durch den Langgutkanal des Anschlussstutzens 2.1 ein Langgut hindurchgeführt worden. Nach Aufbringen der erforderlichen Spannkraft ist ein in die Langguteinführung befindlichen Langgut in derselben Weise darin verklemmt gehalten, wie dieses anhand der Figur 7 der Langgutdurchführung 1 erläutert ist.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

**Bezugszeichenliste**

| | | | |
|---|---|---|---|
| 1, 1.1 | Langgutdurchführung | 23, 23.1 | Führungsabschnitt |
| 2, 2.1 | Anschlussstutzen | 24 | Stützabsatz |
| 3, 3.1 | Endabschnitt | 25 | Endwindung |
| 4, 4.1 | Rastzunge | 26 | Flansch |
| 5 | Freies Ende | 27 | Spannfläche |
| 6, 6.1 | Widerlagerfläche | 28, 28.1 | Flachdichtung |
| 7 | Ringkörper | 29, 29.1 | Einsteckdichtung |
| 8 | Langgutkanal | 30 | Vorsprung |
| 9 | Klemmabschnitt | 31 | Schräganschlag |
| 10 | Klemmfinger | 32 | Elektrisches Kabel |
| 11 | Wurzelbereich | 33 | Gewindesegmentabschnitt |
| 12 | Ringkörper | 34 | Wand |
| 13 | Klemmfläche | | |
| 14 | Stellschräge | K | Klemmabschnitt |
| 15, 15.1 | Stellkörper | | |
| 16 | Rastfingervertiefung | | |
| 17 | Stellschräge | | |
| 18 | Betätigungskontur | | |
| 19 | Schraubendruckfeder | | |
| 20 | Endwindung | | |
| 21 | Stützabsatz | | |
| 22, 22.1 | Spannkörper | | |

## Patentansprüche

1. Langgutdurchführung, insbesondere Kabeldurchführung, umfassend einen einen Langgutkanal (8, 8.1) einfassenden Anschlussstutzen (2, 2.1) mit einem durch eine Öffnung (21) einer Wand (22) einer Installation, etwa einer Installationsdose, durchsteckbaren Endabschnitt (3, 3.1), ausgerüstet mit zumindest einer Widerlagerkontur (6, 6.1), die durch zumindest eine in Richtung zu einem Spannkörper (22, 22.1) weisend ausgestellte Stirnseite einer in radialer Richtung von einem durch den Langgutkanal (8, 8.1) hindurch geführten Langgut (32) beabstandeten Rastzunge (4, 4.1) bereitgestellt ist, welche Widerlagerkontur (6, 6.1) bei durch die Wandöffnung einer Installation durchgestecktem Endabschnitt (3, 3.1) wandinnenseitig abgestützt ist sowie mit einem Klemmabschnitt (9) mit zumindest einem in radialer Richtung verstellbaren, in einer Klemmkörperausnehmung des Stutzens (2, 2.1) angeordneten Klemmkörper (K) zum Verklemmen eines den Klemmabschnitt des Anschlussstutzens (2, 2.1) durchgreifenden Langgutes (32) und umfassend einen auf dem Anschlussstutzens (2) unverlierbar angeordneten und gegenüber diesem in axialer Richtung desselben bewegbaren Stellkörper (15, 15.1) mit einer zum radialen Verstellen des zumindest einen Klemmkörpers (K) ausgelegten und auf diesen wirkenden Stellkontur (17), und umfassend Mittel zum Verspannen des mit der zumindest einen Widerlagerkontur (6, 6.1) seiner zumindest einen Rastzunge (4, 4.1) wandinnenseitig abgestützten Anschlussstutzens (2, 2.1) an der Wand einer Installation, **dadurch gekennzeichnet, dass** der Spannkörper (22, 22.1) und der Stellkörper (15, 15.1) in Richtung der Längserstreckung des Anschlussstutzens (2, 2.1) gegeneinander und gegenüber dem Anschlussstutzen (2, 2.1) verstellbar sind, wobei das Spannmittel sowohl zum Verspannen des Anschlussstutzens (2, 2.1) an der Wand (34) einer Installation auf den Spannkörper (22, 22.1) als auch zum Verklemmen eines den Klemmabschnitt (9) durchgreifenden Langgutes (33) durch den zumindest einen Klemmkörper (K) auf den Stellkörper (15, 15.1) durch eine von dem jeweilig anderen Körper wegweisende Kraft wirkt.

2. Langgutdurchführung nach Anspruch 1, **dadurch gekennzeichnet, dass** der Spannkörper (22, 22.1) einen Führungsabschnitt (23, 23.1) aufweist, mit dem dieser in den Stellkörper (15, 15.1) eingreift und die beiden Komponenten (15, 22; 15.1, 22.1) in Richtung der Längserstreckung des Anschlussstutzens (2, 2.1) gegeneinander verstellbar sind.

3. Langgutdurchführung nach Anspruch 1 oder 2, **dadurch gekennzeichnet, dass** die Langgutdurchführung (1) über zumindest ein Kraftspeicherelement (19) als Spannmittel verfügt, durch das, an einem Stellwiderlager (21) abgestützt, der Spannkörper (22), unter Vorspannung stehend, bei an der Installation montierter Langgutdurchführung (1) gegen die Wandaußenseite wirkt, und durch das der Stellkörper (15), unter Vorspannung stehend, auf den zumindest einen Klemmkörper (K) wirkt, wobei sowohl der Spannkörper (22) als auch der Stellkörper (15) gegenüber dem Anschlussstutzen (2) gegen die Rückstellkraft des zumindest einen Kraftspeicherelementes (19) translatorisch verstellbar sind.

4. Langgutdurchführung nach Anspruch 3, **dadurch gekennzeichnet, dass** als Kraftspeicherelement eine insbesondere als Schraubendruckfeder (19) oder Tellerfeder ausgelegte Druckfeder oder ein aus mehreren Druckfedern, insbesondere mehreren Tellerfedern gebildetes Druckfederpaket vorgesehen ist, welche Druckfeder (19) oder welches Druckfederpaket außenseitig bezüglich des Anschlussstutzens (2) angeordnet ist.

5. Langgutdurchführung nach Anspruch 3 oder 4, **dadurch gekennzeichnet, dass** der Stellkörper (15) als Stellhülse mit einem in radialer Richtung nach innen vorspringenden Anschlag mit einem Stützabsatz (21) als Stellwiderlager für das zumindest eine Kraftspeicherelement (19) ausgeführt ist.

6. Langgutdurchführung nach einem der Ansprüche 3 bis 5, **dadurch gekennzeichnet, dass** der Spannkörper (22) nach Art einer Kappe mit einer Deckeldurchbrechung ausgelegt ist, wobei die Deckeldurchbrechung durch einen in radialer Richtung nach innen vorspringenden Flanschführungsabschnitt zum Führen des Spannkörpers (22) auf dem Anschlussstutzen (2) bereitgestellt ist und durch den Flansch innenseitig ein Stützabsatz (24) als Stellwiderlager für das zumindest eine Kraftspeicherelement (19) bereitgestellt ist.

7. Langgutdurchführung nach Anspruch 1 oder 2, **dadurch gekennzeichnet, dass** der Stellkörper (15.1) und der Spannkörper (22.1) gegeneinander um die Längsachse des Anschlussstutzens (2.1) drehend verstellbar sind und durch zumindest einen Gewindeabschnitt miteinander in Eingriff gestellt sind und dass die nach Verspannen von Stellkörper (15.1) und Spannkörper (22.1) gegeneinander die dadurch bewirkte Spann- und Stellkraft durch die zwischen diesen beiden Körpern (15.1, 22.1) infolge der miteinander in Eingriff stehenden Gewindesegmentabschnitte (33) vorhandene Reibung aufrechterhalten bleibt.

8. Langgutdurchführung nach Anspruch 7 in Rückbezug auf den Anspruch 2, **dadurch gekennzeichnet, dass** an dem Führungsabschnitt (23.1) mehrere Gewindesegmentabschnitte (33) angeformt sind.

9. Langgutdurchführung nach einem der Ansprüche 1 bis 8, **dadurch gekennzeichnet, dass** an der zu der Widerlagerkontur (6, 6.1) der zumindest einen Rastzunge (4, 4.1) weisenden Seite des Spannkörpers (22, 22.1) ein insbesondere als Flachdichtung (28, 28.1) ausgeführter Dichtring angeordnet ist.

10. Langgutdurchführung nach einem der Ansprüche 1 bis 9, **dadurch gekennzeichnet, dass** die an der Wandaußenseite einer Installation abzustützende Klemmfläche des Spannkörpers gekrümmt ausgeführt ist, und zwar komplementär zu der Wandaußenseite der Installation gekrümmt.

11. Langgutdurchführung nach einem der Ansprüche 1 bis 10, **dadurch gekennzeichnet, dass** der zumindest eine Klemmkörper (K) Teil eines an den Anschlussstutzen (2, 2.1) angeformten Klemmfingers (10) ist und dass zumindest der eine Klemmfinger (10) mit Abstand zu seiner Anformung an den Anschlussstutzen (2, 2.1) in Richtung zur einführseitigen Mündung des Anschlussstutzens (2, 2.1) an seiner in radialer Richtung nach innen weisenden Seite seines Klemmkörpers (K) eine auf die Mantelfläche eines eingeführten Langgutes (33) wirkende Klemmfläche (13) aufweist.

12. Langgutdurchführung nach Anspruch 11, **dadurch gekennzeichnet, dass** der zumindest eine Klemmfinger (10) im Bereich seines Klemmkörpers (K) an der seiner Klemmfläche (13) in radialer Richtung gegenüberliegenden Außenseite über eine Stellschräge (14) verfügt, auf die zum Verstellen des Klemmfingers (10) der Stellkörper (15, 15.1) wirkt.

13. Langgutdurchführung nach einem der Ansprüche 1 bis 12, **dadurch gekennzeichnet, dass** Teil des Anschlussstutzens (2, 2.1) ein seine einführseitige Mündung bildender Ringkörper (12) ist, durch den die zumindest eine Klemmkörperausnehmung in dieser Richtung begrenzt ist.

14. Langgutdurchführung nach einem der Ansprüche 1 bis 13, **dadurch gekennzeichnet, dass** in dem Langgutkanal (8) eine in axialer Richtung formschlüssig an der Anschlussstutzeninnenwand gehaltene Einsteckdichtung (29, 29.1) in Längserstreckung des Langgutkanals (8) formschlüssig angeordnet und gehalten ist.

15. Anordnung umfassend eine Langgutdurchführung (1, 1.1) nach einem der Ansprüche 1 bis 14 sowie umfassend eine Installationsdose, insbesondere eine solche zur Aufnahme von elektrischen/elektronischen Komponenten, **dadurch gekennzeichnet, dass** die Installationsdose eine in einer ihrer Wände (34) eingebrachte Öffnung aufweist, in die die Langgutdurchführung (1, 1.1) mit ihrem Endabschnitt (3, 3.1) eingesetzt und mit der Wand (34) infolge der auf den Spannkörper (22, 22.1) auf die Wandaußenseite durch das Spannmittel aufgebrachten Vorspannung unter gleichzeitiger Abstützung der Widerlagerkontur (6, 6.1) auf der Wandinnenseite gehalten ist, und dass der zumindest eine Klemmkörper (K) durch den Stellkörper (15, 15.1) infolge des darauf wirkenden Spannmittels in radialer Richtung in den Langgutkanal (8) verstellt und gegen die Mantelfläche eines darin eingeführten Langgutes (33) wirkt.
